# EUROPEAN PATENT APPLICATION

(11) **EP 4 807 500 A1**
(43) Date of publication of application: **16.09.2026**
(21) Application number: 25190657.4
(22) Date of filing: 21.07.2025
(51) Int. Cl.: G06F 3/01, G06F 1/16, G06F 3/16, G10L 15/26

(54) **CONTROL DEVICE AND PROGRAM**

(30) Priority: 14.03.2025 JP 2025041675
(71) Applicant: FUJIFILM Business Innovation Corp., Minato-ku Tokyo (JP)
(72) Inventor: SASAKI, Hirotake, Ebina-shi, Kanagawa (JP); IKEDA, Nanaka, Ebina-shi, Kanagawa (JP); TAKEUCHI, Ko, Yokohama-shi, Kanagawa (JP); SUDO, Masami, Yokohama-shi, Kanagawa (JP); NIMIYA, Hiroshi, Yokohama-shi, Kanagawa (JP); YOSHIDA, Arisa, Yokohama-shi, Kanagawa (JP); EGAWA, Satoshi, Yokohama-shi, Kanagawa (JP); USAMI, Yukiko, Yokohama-shi, Kanagawa (JP); NISHIKAWA, Masaki, Yokohama-shi, Kanagawa (JP)
(74) Representative: Becker Kurig & Partner Patentanwälte mbB

(57) **Abstract**

A control device includes a processor, in which the control device controls a display device that displays an utterance content image that is an image representing a content of an utterance made by a nearby person located around a target person within a field of view of the target person, and the processor is configured to display the utterance content image in a first display form in which the utterance content image is displayed in a state of being associated with each of nearby persons located within the field of view, and display the utterance content image in a second display form in which the utterance content image is displayed at a specific location within the field of view.

## Description

### BACKGROUND OF THE INVENTION

### (i) Field of the Invention

The present invention relates to a control device and a program.

### (ii) Description of Related Art

JP2023-174317A discloses processing of extracting components in an image included in a video, classifying the video based on the extracted components, and determining a display priority based on the video and the classification of the video.

JP2002-344915A discloses processing of displaying text to which the utterance history information is added as a character string that is connected in a time-series transition in an input order.

### SUMMARY OF THE INVENTION

In a case where an utterance content image, which is an image representing a content of an utterance made by a nearby person located around a target person, is displayed within a field of view of the target person, the target person can know the content of the utterance of the nearby person through the utterance content image.

Here, a case where a display form of the utterance content image cannot be changed and the display form is fixed is assumed. In this case, for example, the utterance content image may be an obstacle, making it difficult to visually recognize the nearby person, or making it difficult to visually recognize objects other than the nearby person.

An object of the present invention is to make it possible to change a display form of an utterance content image, which is an image representing a content of an utterance made by a nearby person located around a target person, in a case where the utterance content image is displayed within a field of view of the target person.

According to a first aspect of the present invention, there is provided a control device including a processor, in which the control device controls a display device that displays an utterance content image that is an image representing a content of an utterance made by a nearby person located around a target person within a field of view of the target person, and the processor is configured to display the utterance content image in a first display form in which the utterance content image is displayed in a state of being associated with each of nearby persons located within the field of view, and display the utterance content image in a second display form in which the utterance content image is displayed at a specific location within the field of view.

According to a second aspect of the present invention, in the control device according to the first aspect, the processor may be configured to switch the display performed by the display device such that the display in one display form among a plurality of display forms including at least the first display form and the second display form is performed.

According to a third aspect of the present invention, in the control device according to the second aspect, the processor may be configured to switch the display performed by the display device based on an instruction from the target person.

According to a fourth aspect of the present invention, in the control device according to the second aspect, the processor may be configured to switch the display performed by the display device based on situation information that is information about a situation within the field of view.

According to a fifth aspect of the present invention, in the control device according to the fourth aspect, the processor may be configured to switch the display performed by the display device based on information about presence or absence of the nearby person within the field of view.

According to a sixth aspect of the present invention, in the control device according to the fifth aspect, the processor may be configured to perform the display in the first display form in a case where the nearby person exists within the field of view, and perform the display in the second display form in a case where the nearby person does not exist within the field of view.

According to a seventh aspect of the present invention, in the control device according to any one of the first to sixth aspects, the processor may be configured to, in the second display form, display the utterance content image in a form in which the utterance content image is associated with a specific target object existing within the field of view.

According to an eighth aspect of the present invention, in the control device according to the seventh aspect, the processor may be configured to display the utterance content image in a form in which the utterance content image does not overlap the specific target object.

According to a ninth aspect of the present invention, in the control device according to any one of the first to sixth aspects, the processor may be configured to, in the second display form, display the utterance content image at a location that is the specific location within the field of view and not overlapping a specific target object existing within the field of view.

According to a tenth aspect of the present invention, in the control device according to any one of the first to ninth aspects, the processor may be configured to change a display form of the utterance content image in the second display form according to a size of a specific target object existing within the field of view, the size being a size of the specific target object with respect to the field of view.

According to an eleventh aspect of the present invention, in the control device according to the tenth aspect, the processor may be configured to, in a case where the size of the specific target object with respect to the field of view is larger than a predetermined threshold value, decrease the number of displayed utterance content images and/or decrease a size of the utterance content image, as compared with a case where the size of the specific target object is smaller than the threshold value.

According to a twelfth aspect of the present invention, in the control device according to any one of the first to eleventh aspects, the display device may have a display screen, the utterance content image may be displayed on the display screen disposed in front of the target person, and the processor may be configured to display the utterance content image, in the second display form, at a location deviated from a central portion of the display screen.

According to a thirteenth aspect of the present invention, in the control device according to the twelfth aspect, the processor may be configured to display the utterance content image, in the second display form, in a form in which the utterance content image is aligned with any one side of four sides of the rectangular display screen.

According to a fourteenth aspect of the present invention, in the control device according to the thirteenth aspect, the processor may be configured to, in a case where a plurality of utterance content images are displayed, display the plurality of utterance content images, in the second display form, in a form in which the plurality of utterance content images are aligned with one side of the four sides and the plurality of utterance content images are arranged in an extending direction of the one side.

According to a fifteenth aspect of the present invention, there is provided a program executed by a computer that controls a display device that displays an utterance content image that is an image representing a content of an utterance made by a nearby person located around a target person within a field of view of the target person, the program causing the computer to realize a function of displaying the utterance content image in a first display form in which the utterance content image is displayed in a state of being associated with each of nearby persons located within the field of view, and of displaying the utterance content image in a second display form in which the utterance content image is displayed at a specific location within the field of view.

According to the first aspect of the present invention, it is possible to change a display form of the utterance content image, which is an image representing the content of the utterance made by the nearby person located around the target person, in displaying the utterance content image within the field of view of the target person.

According to the second aspect of the present invention, it is possible to perform the display in one display form of the first display form and the second display form.

According to the third aspect of the present invention, it is possible to switch the display performed by the display device based on the instruction of the target person.

According to the fourth aspect of the present invention, it is possible to switch the display performed by the display device according to the situation within the field of view of the target person.

According to the fifth aspect of the present invention, it is possible to switch the display performed by the display device according to the situation of the presence or absence of the nearby person within the field of view of the target person.

According to the sixth aspect of the present invention, in a case where the nearby person exists within the field of view of the target person, the utterance content image can be displayed in a state in which the utterance content image is associated with the nearby person, and in a case where the nearby person does not exist within the field of view of the target person, the utterance content image can be displayed at a specific location within the field of view of the target person.

According to the seventh aspect of the present invention, in the second display form in which the utterance content image is displayed at the specific location within the field of view of the target person, the utterance content image can be displayed in a form in which the utterance content image is associated with the specific target object existing within the field of view of the target person.

According to the eighth aspect of the present invention, it is possible to make it easier to visually recognize the specific target object and the utterance content image, as compared with a case where the utterance content image is displayed in a manner in which the utterance content image overlaps the specific target object.

According to the ninth aspect of the present invention, it is possible to make it easier to visually recognize the specific target object or the utterance content image, as compared with a case where the utterance content image is displayed at a location overlapping the specific target object existing within the field of view of the target person.

According to the tenth aspect of the present invention, it is possible to change the display form of the utterance content image according to the size of the specific target object with respect to the field of view of the target person.

According to the eleventh aspect of the present invention, it is possible to make it easier for the target person to visually recognize the specific target object, as compared with a case where the number of displayed utterance content images is not reduced or the size of the utterance content image is not reduced.

According to the twelfth aspect of the present invention, the target person can more easily visually recognize the image other than the utterance content image, which is the image displayed on the display screen, as compared with a case where the utterance content image is displayed in the central portion of the display screen.

According to the thirteenth aspect of the present invention, the target person can more easily visually recognize the image other than the utterance content image, which is the image displayed on the display screen, as compared with a case where the utterance content image is displayed in the central portion of the display screen.

According to the fourteenth aspect of the present invention, the target person can more easily visually recognize the image other than the utterance content image, which is the image displayed on the display screen, as compared with a case where the plurality of utterance content images are displayed in a form in which the plurality of utterance content images are arranged in a direction intersecting the extending direction of the one side.

According to the fifteenth aspect of the present invention, it is possible to change a display form of the utterance content image, which is an image representing the content of the utterance made by the nearby person located around the target person, in displaying the utterance content image within the field of view of the target person.

### BRIEF DESCRIPTION OF THE DRAWINGS

Exemplary embodiment(s) of the present invention will be described in detail based on the following figures, wherein:
FIG. 1 is a diagram showing an overall configuration of an information processing system;
FIG. 2 is a diagram showing a configuration of a management server;
FIG. 3 is a diagram showing a hardware configuration of a display device;
Parts of (A) and (B) in FIG. 4 are diagrams for describing processing executed by the information processing system according to the present exemplary embodiment;
FIG. 5 is a diagram showing a database stored in an information storage unit of the management server;
FIG. 6 is a diagram illustrating another display example in the display unit;
FIG. 7 is a diagram showing a display in a second display form;
FIG. 8 is a diagram showing a display screen in a case where a target person views a monitor existing in a real space through a left-side region;
FIG. 9 is a diagram showing a situation of a display screen in a case where a target person views a paper document existing in the real space;
FIG. 10 is a diagram showing a situation around the target person;
FIG. 11 is a diagram showing a display example in a case where an utterance content image is associated with a monitor which is an example of a specific target object existing within the field of view of the target person;
FIG. 12 is a diagram showing a state of a display screen in a case where the target person is viewing a document at hand;
FIG. 13 is a diagram for describing another example of a display location of the utterance content image;
FIG. 14 is a diagram showing a display example in a case where a size of a specific target object with respect to the field of view of the target person is smaller than a predetermined threshold value;
FIG. 15 is a diagram showing a display example in a case where a size of a specific target object with respect to the field of view of the target person is larger than a predetermined threshold value;
FIG. 16 is a diagram showing another display example in a display unit;
FIG. 17 is a diagram showing still another display example in the display unit;
FIG. 18 is a diagram showing a relationship between a specific target object and a target person;
FIG. 19 is a diagram for describing the number of display columns of the utterance content image; and
FIG. 20 is a diagram for describing the number of display columns of the utterance content image.

### DETAILED DESCRIPTION OF THE INVENTION

An exemplary embodiment of the present invention will be described below with reference to the accompanying drawings.

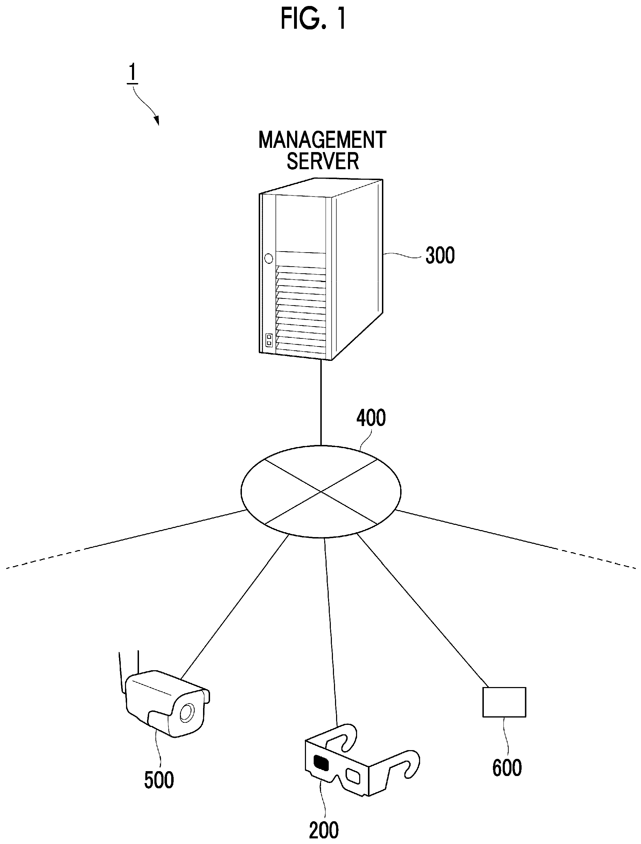

FIG. 1 is a diagram showing an overall configuration of an information processing system 1 according to the present exemplary embodiment.

The information processing system 1 is provided with a management server 300. Further, the information processing system 1 is provided with a display device 200 that is worn by each of target persons described below.

In FIG. 1, although only one display device 200 is displayed, a plurality of display devices 200 are provided in accordance with the number of target persons.

The display device 200 is a glasses-type display device 200. The display device 200 is worn on the head of the target person. The display device 200 displays an image within a field of view of the target person. Accordingly, the target person visually recognizes the image. In addition, the target person visually recognizes the surroundings of the target person through the display device 200.

Further, in the present exemplary embodiment, an entire camera 500 is provided.

The entire camera 500 is a camera that images the target person wearing the display device 200 and a nearby person, which will be described later, located around the target person.

The entire camera 500 is provided for each place where the target person is located. In a case where there are a plurality of places where the target person is located, a plurality of entire cameras 500 are also provided.

Further, in the present exemplary embodiment, an individual microphone 600 worn by each of the nearby persons, which will be described later, is provided. The individual microphone 600 acquires a voice of the nearby person and generates voice information.

The individual microphone 600 is provided for each nearby person, and in a case where there are a plurality of nearby persons, a plurality of individual microphones 600 are provided.

Each of the display device 200, the entire camera 500, and the individual microphone 600 is connected to the management server 300 through a communication line 400 such as the Internet.

### [Configuration of Management Server 300]

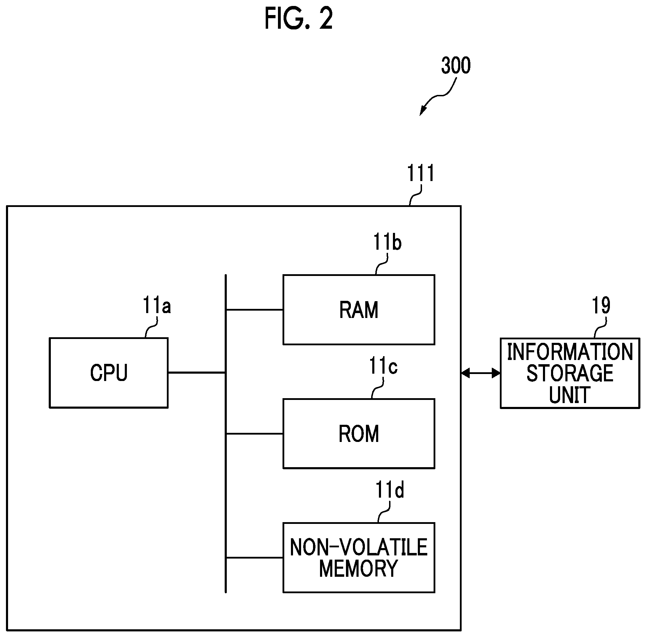

FIG. 2 is a diagram showing a configuration of the management server 300. The management server 300 is realized by a computer.

The management server 300 includes an arithmetic processing unit 111 that executes digital arithmetic processing according to a program, and an information storage unit 19 that stores information.

The information storage unit 19 is realized by an existing information storage device. The information storage unit 19 is configured by, for example, any one of a hard disk drive (HDD), a semiconductor memory, or a magnetic tape.

The arithmetic processing unit 111 is provided with a CPU 11a which is an example of a processor.

In addition, the arithmetic processing unit 111 is provided with a RAM 11b used as a work memory or the like of the CPU 11a and a ROM 11c in which programs or the like executed by the CPU 11a are stored.

Further, the arithmetic processing unit 111 is provided with a non-volatile memory 11d that is configured to be rewritable and can hold data even in a case where power supply is interrupted.

The non-volatile memory 11d is configured by, for example, an SRAM or a flash memory that is backed up by a battery. The information storage unit 19 stores various types of information such as a program executed by the arithmetic processing unit 111.

In the present exemplary embodiment, the CPU 11a provided in the arithmetic processing unit 111 reads the program stored in the ROM 11c or the information storage unit 19, and thus various types of processing performed by the management server 300 are executed.

The program executed by the CPU 11a can be provided to the management server 300 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

Further, the program to be executed by the CPU 11a may be provided to the management server 300 by using communication means such as the Internet.

### [Configuration of Device]

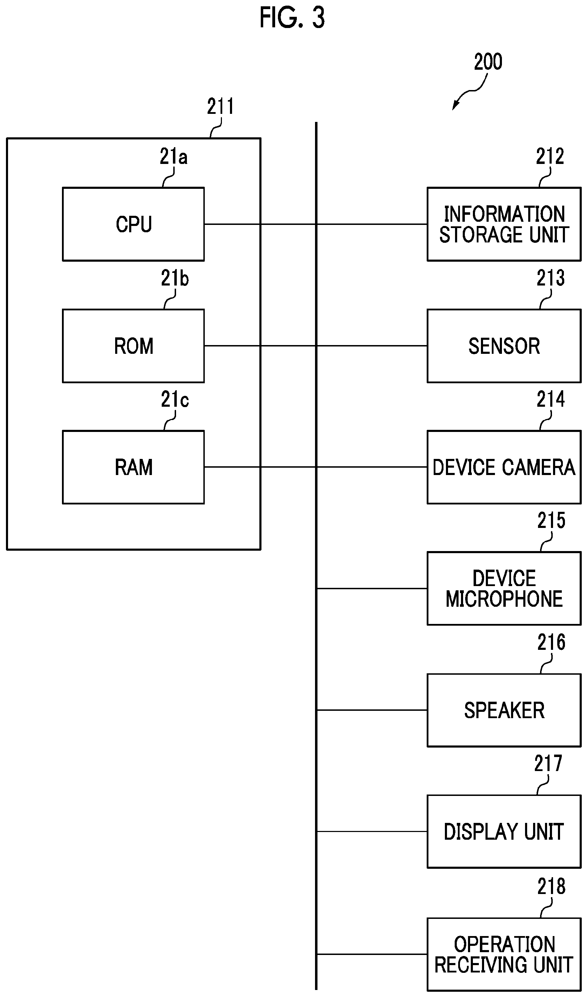

FIG. 3 is a diagram showing a hardware configuration of the display device 200.

The display device 200 includes an arithmetic processing unit 211, an information storage unit 212, a sensor 213, a device camera 214, a device microphone 215, a speaker 216, a display unit 217, and an operation receiving unit 218.

The arithmetic processing unit 211 is provided with a CPU 21a which is an example of a processor.

In addition, the arithmetic processing unit 211 is provided with a RAM 21c used as a work memory or the like of the CPU 21a and a ROM 21b in which programs or the like executed by the CPU 21a are stored.

The information storage unit 212 is realized by an existing information storage device, such as a semiconductor memory.

Examples of the sensor 213 include a GPS sensor and a direction sensor. A current position of the display device 200 or the orientation of the display device 200 can be specified by referring to the output from the sensor 213.

The device camera 214 is a camera that images the surroundings of the display device 200.

The device camera 214 faces a front direction of the target person in a state in which the display device 200 is worn by the target person, and images the front direction. In other words, the device camera 214 faces a side that the target person faces and images the side ahead of the target person.

The device microphone 215 acquires a voice of the target person and generates voice information.

The speaker 216 outputs sound or the voice and performs notification processing to the target person to which the display device 200 is worn.

The display unit 217 is a so-called display and displays various kinds of information. The display unit 217 is disposed in front of the target person in a state in which the display device 200 is worn by the target person.

In the present exemplary embodiment, a video obtained by the device camera 214 is displayed on the display unit 217. In a state in which the display device 200 is worn by the target person, the display unit 217 displays a video showing a state in front of the target person.

In the present exemplary embodiment, the target person visually recognizes the real space located in front of the target person by referring to the video displayed on the display unit 217.

The operation receiving unit 218 is a functional unit that receives an operation from a user. The operation receiving unit 218 is configured by, for example, a switch or a touch panel.

In addition, the display device 200 may be a transmissive display device 200.

In the transmissive display device 200, a transparent display unit 217 that allows the target person to visually recognize the space behind the display unit 217 is installed as the display unit 217.

The target person visually recognizes the space behind the display unit 217 through the display unit 217. In other words, the target person visually recognizes a space ahead of the target person through the display unit 217.

In the transmissive display device 200, a user visually recognizes the real space that is visible through the display unit 217 and is located behind the display unit 217 and the image displayed on the display unit 217.

The program executed by the CPU 21a can be provided to the display device 200 via a recording medium.

Examples of the recording medium include a magnetic recording medium such as a magnetic tape or a magnetic disk. Examples of the recording medium also include an optical recording medium such as an optical disc.

Examples of the recording medium also include a magneto-optical recording medium. Examples of the recording medium also include a semiconductor memory.

In addition, the program executed by the CPU 21a may be provided to the display device 200 by using a communication means such as the Internet.

The display device 200 is not limited to the glasses-type display device 200, and other examples thereof include a smartphone and a tablet terminal.

All of the glasses-type display device 200, the smartphone, the tablet terminal, and the like are devices that can be carried by the target person.

Each of the smartphone and the tablet terminal is also provided with the display unit 217 and the device camera 214. The target person can visually recognize the space in front of the target person by referring to the video that is captured by the device camera 214 and that is displayed on the display unit 217.

In other words, in this case, the target person can visually recognize a space that is located in front of the target person and is located behind the smartphone or the tablet terminal by referring to the display unit 217 that is provided in the smartphone or the tablet terminal disposed in front of the target person.

In the present exemplary embodiment, as will be described later, the content of the utterance of the nearby person is notified to the target person via the display device 200. The present invention is not limited to the glasses-type display device 200, and such a notification can be performed even in a case where a smartphone or a tablet terminal is used.

### [Description of Processing Executed by Information Processing System]

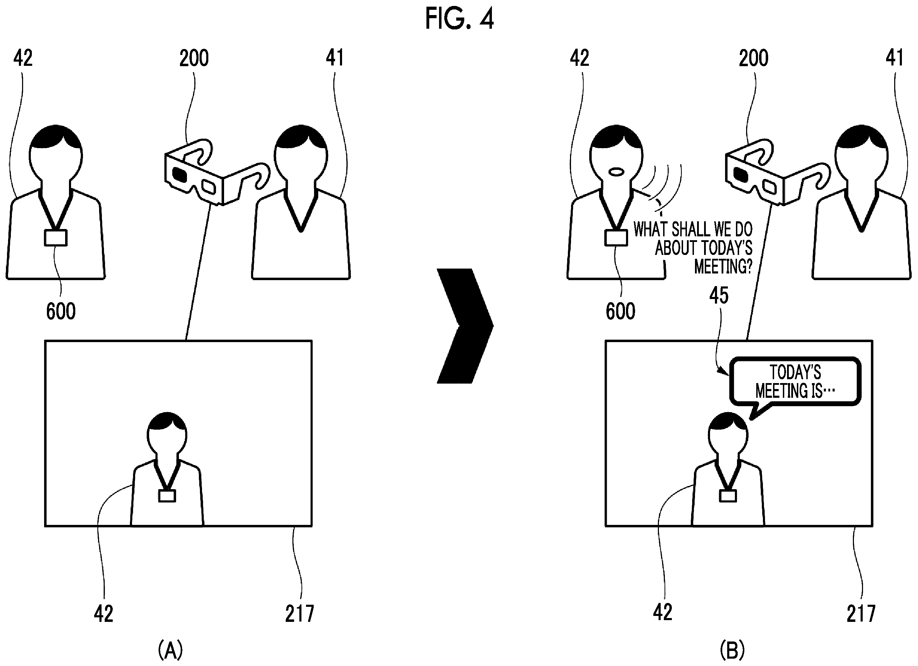

Parts of (A) and (B) in FIG. 4 are diagrams for describing processing executed by the information processing system 1 according to the present exemplary embodiment.

A part (A) in FIG. 4 shows a target person 41 who wears the display device 200 and a nearby person 42 who is a person located around the target person 41.

In the present exemplary embodiment, the display device 200 is worn by the target person 41.

In this example, as shown in the part (A) in FIG. 4, a situation in which the nearby person 42 is displayed on the display unit 217 provided in the display device 200 is presented.

Further, in this example, as shown in the part (A) in FIG. 4, the individual microphone 600 is worn by the nearby person 42.

As described above, the display device 200 of the present exemplary embodiment is a glasses-type device. The glasses-type display device 200 is worn on the head of the target person 41.

The target person 41 visually recognizes the nearby person 42 located around the target person 41 through the display device 200. In other words, the target person 41 visually recognizes the nearby person 42 located in front of the target person 41 through the display device 200.

As shown in FIG. 3, the display device 200 is provided with the device camera 214 and the display unit 217 that can display a video obtained by the device camera 214.

The target person 41 visually recognizes the nearby persons 42 by referring to the nearby persons 42 who are imaged by the device camera 214 and are displayed on the display unit 217.

A case where the display device 200 is the above-described transmissive device is also assumed. In this case, the target person 41 visually recognizes the nearby persons 42 located behind the display unit 217 through the display unit 217 that is transparent.

In the present exemplary embodiment, in the state shown in the part (A) in FIG. 4, the CPU 11a as an example of the processor provided in the management server 300 shown in FIG. 2 acquires the voice information of the nearby person 42 who is a person located around the target person 41.

The CPU 11a acquires the voice information obtained by the individual microphone 600, which is a microphone worn by each of the nearby persons 42, from the individual microphone 600.

In the present exemplary embodiment, the voice information obtained by the individual microphone 600 is transmitted to the management server 300 through the communication line 400. The CPU 11a of the management server 300 acquires the voice information.

### [Description about Database]

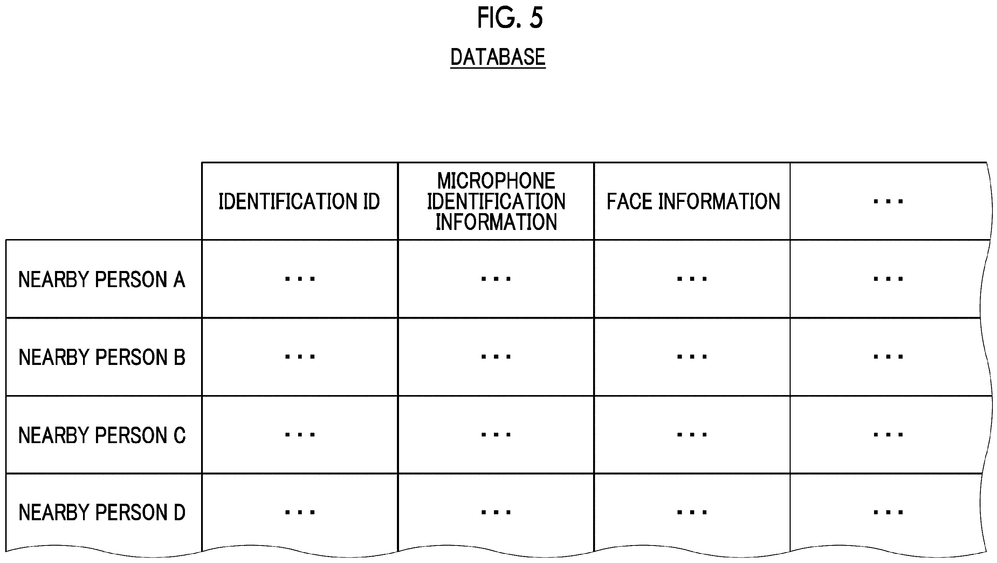

FIG. 5 is a diagram showing a database stored in the information storage unit 19 of the management server 300.

In the present exemplary embodiment, as shown in FIG. 2, the information storage unit 19 is provided in the management server 300. In the present exemplary embodiment, the information about the nearby person 42 is registered in the database shown in FIG. 5 stored in the information storage unit 19 for each nearby person 42.

In the present exemplary embodiment, an identification ID that is information used to identify each of the nearby persons 42 is registered in the database in advance for each nearby person 42. In addition, in the database, for each nearby person 42, microphone identification information that is identification information of the individual microphone 600 of each of the nearby persons 42 and face information of the nearby person 42 are registered.

In the present exemplary embodiment, the face of the nearby person 42 is imaged in advance. Then, the face information, which is information about the face of the nearby person 42, is registered in the database.

As the face information, an image of the face of the nearby person 42 or information about a feature amount of the face of the nearby person 42 obtained by analyzing the image is registered.

In the present exemplary embodiment, as described above, the video acquired by the device camera 214 and the voice information obtained by the individual microphone 600 are transmitted to the management server 300.

The CPU 11a of the management server 300 acquires the video and the voice information, specifies who the nearby person 42 displayed on the display unit 217 is based on the video and voice information, and further acquires the voice information of the nearby person 42.

The CPU 11a of the management server 300 acquires the video acquired by the device camera 214. Then, the CPU 11a of the management server 300 specifies the nearby person 42 appearing in the video based on the image of the face of the nearby person 42 appearing in the video and the face information stored in the database.

In addition, the CPU 11a of the management server 300 acquires the voice information acquired by the individual microphone 600. In addition, the CPU 11a of the management server 300 acquires the microphone identification information transmitted to the management server 300 together with the voice information.

The CPU 11a of the management server 300 specifies whose voice information the voice information transmitted from the individual microphone 600 is, based on the microphone identification information and the microphone identification information stored in advance in the database.

Each individual microphone 600 stores microphone identification information for identification of each individual microphone 600.

The voice information acquired by the individual microphone 600 and the microphone identification information are transmitted from the individual microphone 600 to the management server 300.

The CPU 11a of the management server 300 specifies the nearby person 42 from whom the voice information has been acquired by the individual microphone 600, based on the microphone identification information and the microphone identification information registered in the database.

In the present exemplary embodiment, the individual microphone 600 is prepared for each of the nearby persons 42.

In the present exemplary embodiment, the voice information of each of the nearby persons 42 is acquired by the individual microphone 600 prepared for each of the nearby persons 42.

In the present exemplary embodiment, the voice information obtained by the individual microphone 600 is transmitted to the management server 300 together with the microphone identification information as described above.

The CPU 11a of the management server 300 specifies the nearby person 42 based on the microphone identification information, and acquires the voice information about the specified nearby person 42.

More specifically, in the present exemplary embodiment, in the transmission of the voice information from the individual microphone 600 to the management server 300, the individual microphone 600 selects the voice information of which the sound pressure exceeds a predetermined threshold value from the voice information obtained by the individual microphone 600.

Then, the selected voice information is transmitted from the individual microphone 600 to the management server 300 together with microphone identification information.

Accordingly, in the present exemplary embodiment, it is possible to suppress the voice information of another nearby person 42, who is different from the nearby person 42 who is wearing the individual microphone 600, from being transmitted to the management server 300 through the individual microphone 600.

The other nearby person 42 is located away from a microphone-wearing nearby person 42, who is the nearby person 42 wearing the individual microphone 600. In this case, the sound pressure of a voice of the other nearby person 42 that is acquired by the individual microphone 600 is usually low.

In the configuration in which the voice information in which the sound pressure exceeds the predetermined threshold value is selected and the voice information is transmitted to the management server 300, the voice information of the other nearby person 42 is suppressed from being transmitted to the management server 300 through the individual microphone 600 of the microphone-wearing nearby person 42.

The management server 300 may select voice information of which the sound pressure exceeds the predetermined threshold value.

In this case, the management server 300 selects the voice information in which the sound pressure exceeds the predetermined threshold value from the voice information transmitted from the individual microphone 600.

Then, the management server 300 acquires the selected voice information as the voice information of the microphone-wearing nearby person 42.

In addition, the CPU 11a of the management server 300 may acquire the voice information of each of the nearby persons 42 based on the voice information obtained by the microphone provided in a terminal device of each of the nearby persons 42. Examples of the terminal device of each of the nearby persons 42 include a smartphone and a tablet terminal.

In addition, a common microphone may be provided, and the CPU 11a of the management server 300 may acquire the voice information of each of the nearby persons 42 based on the voice information acquired by the common microphone.

In a case where the common microphone is used, feature information, which is information on the feature of the voice of each of the nearby persons 42, is registered in the database in advance.

The CPU 11a of the management server 300 specifies the voice information of each of the nearby persons 42 based on the feature information registered in the database, and acquires the voice information of each of the nearby persons 42.

In addition, the voice information of each of the nearby persons 42 may be acquired using an omnidirectional microphone.

In a case where the omnidirectional microphone is used, the omnidirectional microphone is installed in a central portion of the plurality of nearby persons 42 located to be disposed in a circle.

Furthermore, the directions from which each of a plurality of nearby persons 42 is viewed from the omnidirectional microphone and nearby person identification information for identifying each nearby person 42 are stored in advance in the database in association with each other.

In a case where the voice information is acquired in the omnidirectional microphone, the omnidirectional microphone also acquires information about a direction of a location where the utterance that is the basis of the voice information is made.

In this case, the CPU 11a of the management server 300 acquires, from the database, the nearby person identification information associated with the direction specified by the information on the acquired direction. As a result, the CPU 11a of the management server 300 specifies the nearby person 42 who has made the utterance.

In the present exemplary embodiment, as described above, the CPU 11a of the management server 300 specifies and acquires the voice information of each of the nearby persons 42 based on the video acquired by the device camera 214 and the voice information obtained by the individual microphone 600.

In a case where the CPU 11a of the management server 300 acquires the voice information, the CPU 11a analyzes the voice information to acquire an utterance content, which is the content of the utterance of the nearby person 42.

The CPU 11a of the management server 300 analyzes the voice information transmitted from the individual microphone 600 worn by the nearby person 42 to acquire the utterance content of the nearby person 42. A known method may be used to acquire the utterance content based on the voice information.

Next, the CPU 11a of the management server 300 generates control information for displaying the utterance content image, which is the image representing the acquired utterance content, on the display unit 217 in a form associated with the nearby person 42 who has made the utterance with the utterance content.

Then, the CPU 11a of the management server 300 transmits the generated control information to the display device 200.

As a result, in the present exemplary embodiment, as shown in a part (B) in FIG. 4, an utterance content image 45, which is an image representing the utterance content of the nearby person 42, is displayed on the display unit 217 of the display device 200. The utterance content image 45 is displayed in a form associated with the nearby person 42.

The display device 200 displays the utterance content image 45, which is an image representing the content of the utterance made by the nearby person 42, and displays the utterance content image 45 within the field of view of the target person 41. As a result, even in a case where the target person 41 has a hearing impairment, the target person 41 can know the content of the utterance of the nearby person 42.

In the present exemplary embodiment, the management server 300 substantially controls the display on the display device 200. With this control, the utterance content image 45 is displayed within the field of view of the target person 41.

The management server 300 can be regarded as a control device that performs display control. In addition, in the present exemplary embodiment, it can also be said that a display system is configured by the display device 200 and the management server 300 having a function of controlling the display on the display device 200.

An installation location of a control function unit that performs the control of the display on the display device 200 is not particularly limited. The control function unit may be provided in the display device 200. In this case, a portion of the control function unit provided in the display device 200 corresponds to a control device that controls the display in the display device 200.

In addition, the control function unit may be provided in a distributed manner in both the display device 200 and the management server 300.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The processing executed by the management server 300 will be further described.

The CPU 11a of the management server 300 specifies each of the nearby persons 42 displayed on the display unit 217 shown in the part (A) in FIG. 4 based on the video acquired by the device camera 214 shown in FIG. 3.

Specifically, the CPU 11a of the management server 300 specifies each of the nearby persons 42 displayed on the display unit 217 of the display device 200, based on the video of the nearby person 42 appearing in the video acquired by the device camera 214 and the face information registered in the database.

Then, the CPU 11a of the management server 300 generates control information for associating the utterance content image 45 with the nearby person 42 who has made the utterance among the specified nearby persons 42.

In other words, the CPU 11a of the management server 300 generates control information for associating the utterance content image 45 with the nearby person 42, among the specified nearby persons 42, for whom the voice information has been obtained.

Specifically, in generating the control information, the CPU 11a generates the control information including positional information that is information about a display position of the utterance content image 45.

The CPU 11a determines a position of the nearby person 42 appearing in the video acquired by the device camera 214 as the display position of the utterance content image 45, and generates control information including positional information that is information about the display position.

More specifically, the CPU 11a determines a position around the head of the nearby person 42 on the video acquired by the device camera 214, as the display position of the utterance content image 45.

Then, the CPU 11a generates control information including positional information that is information about the determined display position.

Then, in the present exemplary embodiment, the control information including the positional information is transmitted to the display device 200.

Then, the display device 200 performs display control such that the utterance content image 45 is displayed at the position specified by the positional information.

As a result, as shown in the part (B) in FIG. 4, the display unit 217 of the display device 200 displays the utterance content image 45 in a form in which the utterance content image 45 is associated with the nearby person 42 who has made the utterance.

A case where the display device 200 is the above-described transmissive display device 200 is also assumed.

In this case, the CPU 11a of the management server 300 generates control information for displaying the utterance content image 45 in a portion of the display unit 217 of the display device 200, which is located on a straight line connecting the eyes of the target person 41 and the nearby person 42.

In this case, the CPU 11a of the management server 300 first acquires an angle formed between a front direction of the display device 200 and a direction from the display device 200 toward the nearby person 42.

Specifically, the CPU 11a of the management server 300 analyzes the video acquired by the device camera 214 to acquire an angle formed between the front direction and the direction toward the nearby person 42.

Then, the CPU 11a determines a display position of the utterance content image 45 on the display unit 217 based on the formed angle, and generates control information including information about the determined display position.

As a result, even in the transmissive display device 200, the utterance content image 45 is displayed in a form in which the utterance content image 45 is associated with the nearby person 42.

In this case, the target person 41 visually recognizes the nearby person 42 existing in the real space and the utterance content image 45 displayed on the display unit 217, which is the utterance content image 45 located between the target person's eyes and the nearby person 42.

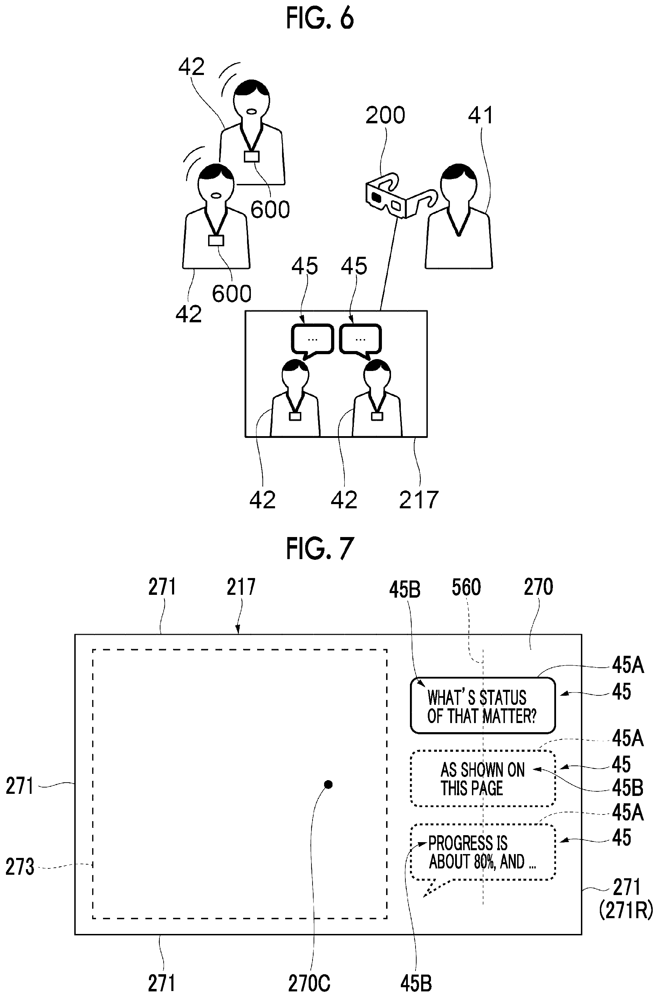

FIG. 6 is a diagram illustrating another display example in the display unit 217.

In a case where a plurality of the nearby persons 42 are displayed on the display unit 217 of the display device 200, the CPU 11a of the management server 300 generates control information for associating the utterance content image 45 with each of the plurality of nearby persons 42, as the control information.

In this case, as shown in FIG. 6, the display unit 217 of the display device 200 displays the utterance content image 45 in a form in which the utterance content image 45 is associated with each of the plurality of nearby persons 42.

In this case, the target person 41 referring to the display unit 217 of the display device 200 recognizes the utterance content of each of the plurality of nearby persons 42.

### [Display Switching Processing]

**In** the present exemplary embodiment, as described above, the CPU 11a of the management server 300 displays the utterance content image 45 in a display form in which the utterance content image 45 is displayed in a state in which the utterance content image 45 is associated with each of the nearby persons 42.

Hereinafter, in the present specification, this display form will be referred to as a "first display form".

Further, in the present exemplary embodiment, as will be described below, the CPU 11a of the management server 300 displays the utterance content image 45 in a display form in which the utterance content image 45 is displayed at a specific location within the field of view of the target person 41.

Hereinafter, in the present specification, this display form will be referred to as a "second display form".

FIG. 7 is a diagram showing a display in the second display form.

**In** FIG. 7, the video of the real space located behind the display unit 217 is not displayed. As shown in FIG. 7, the CPU 11a of the management server 300 displays the utterance content image 45 at a location deviated from a central portion 270C of a display screen 270 in the second display form.

The display unit 217 of the display device 200 has a rectangular display screen 270. **In** the second display form, the utterance content image 45 is displayed at a location deviated from the central portion 270C of the display screen 270.

**In** the present exemplary embodiment, the display screen 270 is disposed in front of the target person 41. **In** the second display form, the utterance content image 45 is displayed at a location deviated from the central portion 270C of the display screen 270 disposed in front of the target person 41.

More specifically, in the second display form, the CPU 11a of the management server 300 displays the utterance content image 45 in a form in which the utterance content image 45 is aligned with any one side 271 of the four sides 271 of the display screen 270, for example.

In the example shown in FIG. 7, the CPU 11a of the management server 300 displays the utterance content image 45 in a form in which the utterance content image 45 is aligned with the right side 271R of the four sides 271.

Further, in this example, in the second display form, the CPU 11a of the management server 300 displays the plurality of utterance content images 45 side by side in displaying the plurality of utterance content images 45 as shown in FIG. 7.

Specifically, the CPU 11a of the management server 300 displays the plurality of utterance content images 45 in a form in which the plurality of utterance content images 45 are arranged in an extending direction of one side 271 of the four sides 271.

In the example shown in FIG. 7, the plurality of utterance content images 45 are arranged along the extending direction of the right side 271R. In addition, the plurality of utterance content images 45 are displayed in a form of being aligned with the right side 271R.

In the example shown in FIG. 7, in the second display form, the CPU 11a of the management server 300 displays the utterance content image 45 in a form in which the utterance content image 45 is not associated with the nearby person 42 located within the field of view of the target person 41.

In FIG. 7, the video of the real space located behind the display unit 217 is not displayed, and the nearby person 42 is not displayed.

Even in a case where the nearby person 42 exists in the real space and a situation in which the nearby person 42 is displayed on the display unit 217 occurs, in the second display form, the utterance content image 45 is not associated with the nearby person 42.

In the second display form, the utterance content image 45 is displayed in a form in which the utterance content image 45 is aligned with one side 271 of the four sides 271 described above regardless of the presence or absence of the nearby person 42.

In the second display form shown in FIG. 7, the utterance content image 45 is not displayed in a left-side region 273 of the display screen 270, which is located on the left side in FIG. 7 with respect to the display location of the utterance content image 45. In this case, the target person 41 can easily visually recognize the real space through the left-side region 273.

Here, the target person 41 may want to visually recognize something other than the utterance content while confirming the utterance content of the nearby person 42.

Depending on the target person 41, there may be a case where the target person 41 wants to visually recognize, for example, a monitor on which the video is displayed or the document at hand while confirming the utterance content of the nearby person 42.

In this case, as described above, in a case where the left-side region 273 exists, the target person 41 can easily visually recognize the monitor or the document through the left-side region 273.

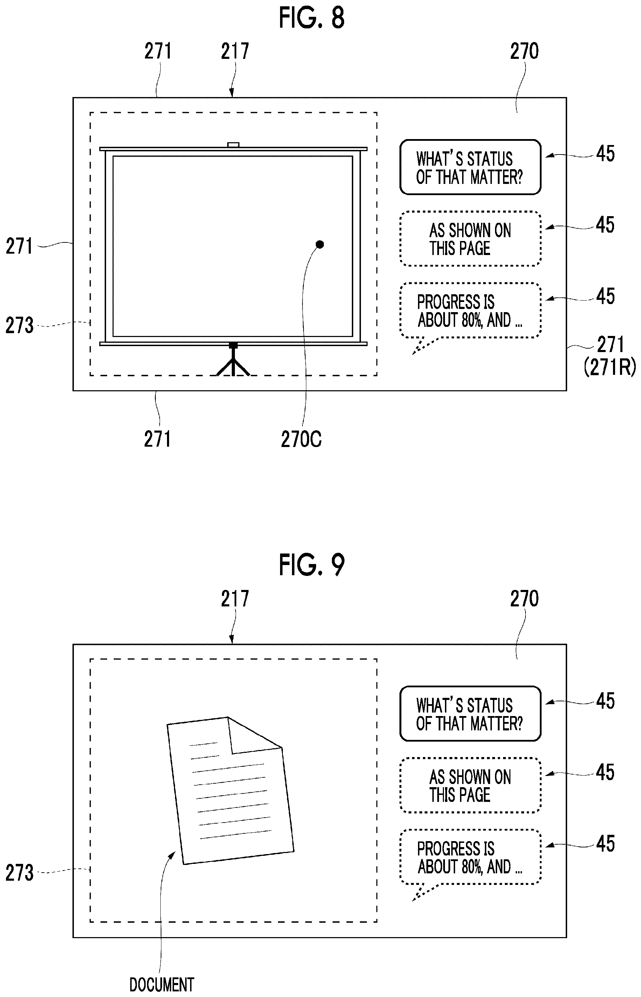

FIG. 8 is a diagram showing the display screen 270 in a case where the target person 41 views the monitor existing in the real space through the left-side region 273.

In a situation in which the display is performed in the second display form, as described above, the utterance content image 45 is not displayed in the left-side region 273 of the display screen 270.

In this case, the display on the display screen 270 is in the situation shown in FIG. 8.

In the situation of the display screen 270 shown in FIG. 8, the target person 41 can visually recognize the video displayed on the monitor while confirming the utterance content image 45.

FIG. 9 is a diagram showing a situation of the display screen 270 in a case where the target person 41 views a paper document existing in the real space.

In a case where the target person 41 views the document existing in the real space through the left-side region 273 in a situation in which the display is performed in the second display form, the situation of the display on the display screen 270 becomes the situation shown in FIG. 9.

In the situation shown in FIG. 9, the target person 41 can visually recognize the document while confirming the utterance content of the nearby person 42.

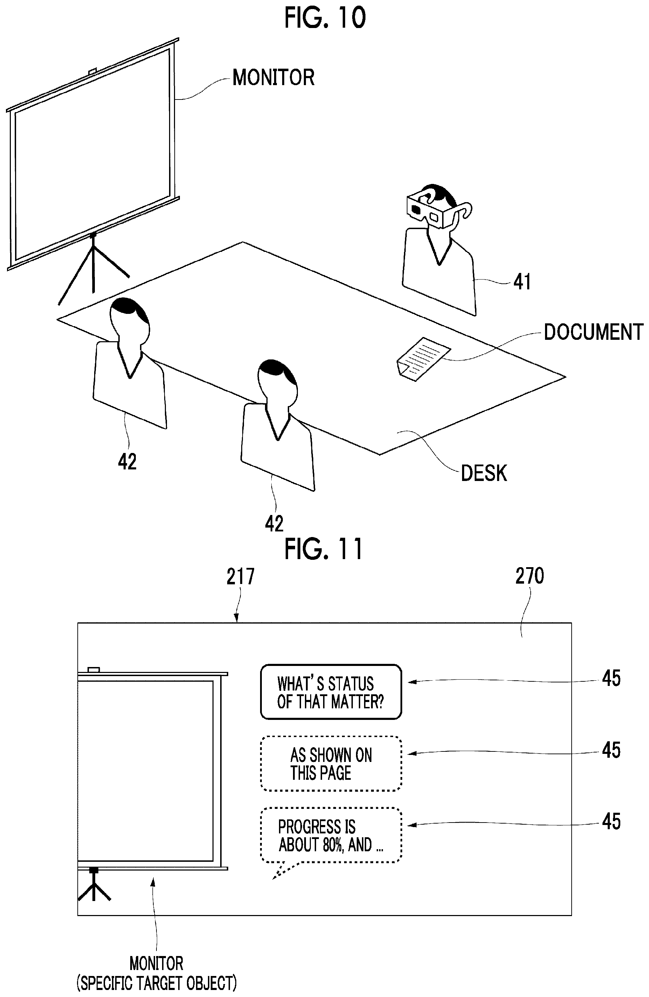

FIG. 10 is a diagram showing a situation around the target person 41.

The monitor and the paper document may exist around the target person 41.

In a case where a display form is switched to the second display form, the target person 41 can visually recognize the video displayed on the monitor or the document while confirming the utterance content of the nearby person 42.

Here, in a case where the target person 41 faces in the direction of the monitor or the document and in a case where the utterance content image 45 is not displayed at all, it becomes difficult for the target person 41 to confirm the content of the utterance made by the nearby person 42.

On the other hand, in a case where the target person 41 faces in the direction of the monitor or the document and in a case where the most recent utterance content image 45 is displayed as it is, it becomes difficult for the target person 41 to visually recognize the monitor or the document.

It is also conceivable that, after the target person 41 faces in the direction of the monitor or the document, the latest utterance content image 45 is displayed at a location where the most recent utterance content image 45 had been displayed. In this case as well, it is difficult for the target person 41 to visually recognize the monitor or the document.

On the other hand, in the present exemplary embodiment, as described above, the utterance content image 45 is displayed in a form in which the utterance content image is aligned with any one side 271 of the plurality of sides 271 of the display screen 270.

In this case, the target person 41 can perform both the confirmation of the utterance content of the nearby person 42 and the visual recognition of the monitor and the document.

In the present exemplary embodiment, it is possible to switch between a first display form in which a speaker and the utterance content image 45 can be visually recognized at the same time and a second display form in which the utterance content image 45, the monitor, and the document can be visually recognized at the same time.

The CPU 11a of the management server 300 switches the display performed by the display device 200 such that the display in one display form among a plurality of display forms including at least the first display form and the second display form is performed.

In the present exemplary embodiment, the plurality of display forms of the first display form and the second display form are prepared. However, the present invention is not limited to this, and the plurality of display forms may further include other display forms in addition to the first display form and the second display form.

In any case, in the present exemplary embodiment, at least the switching from the first display form to the second display form and the switching from the second display form to the first display form can be performed.

Here, the CPU 11a of the management server 300 switches the display performed by the display device 200 based on, for example, the instruction from the target person 41.

For example, the target person 41 performs an operation on the operation receiving unit 218 shown in FIG. 3 and switches the display. The operation receiving unit 218 is provided with a physical button or provided with a touch panel.

The target person 41 performs an operation on the button or the touch panel and switches the display. In a case where the target person 41 performs the operation of switching the display, the content of the operation is notified to the management server 300.

In response to this, the CPU 11a of the management server 300 switches the display performed by the display device 200.

In addition, the target person 41 may hold a dedicated switch. In this case, the target person 41 performs an operation on the dedicated switch and switches the display.

In addition, the CPU 11a of the management server 300 may switch the display performed by the display device 200 based on situation information which is information about the situation within the field of view of the target person 41.

Specifically, the CPU 11a of the management server 300 may switch the display performed by the display device 200 based on, for example, information about the presence or absence of the nearby person 42 within the field of view of the target person 41.

Specifically, in this case, the CPU 11a of the management server 300 performs the display in the first display form in a case where the nearby person 42 exists within the field of view. In addition, the CPU 11a of the management server 300 performs the display in the second display form in a case where the nearby person 42 does not exist within the field of view.

In this case, the CPU 11a of the management server 300 changes the display form of the utterance content image 45 displayed within the field of view according to whether or not the nearby person 42 is within the field of view of the target person 41.

In other words, in this case, the CPU 11a of the management server 300 changes the display form of the utterance content image 45 on the display screen 270 according to whether or not the nearby person 42 appears in the video obtained by the device camera 214.

In a case where the nearby person 42 is within the field of view of the target person 41, the CPU 11a of the management server 300 performs display in the first display form.

In other words, in a case where the nearby person 42 appears in the video obtained by the device camera 214, the CPU 11a of the management server 300 performs display in the first display form.

That is, in this case, the CPU 11a of the management server 300 displays the utterance content image 45 in association with the nearby person 42.

In addition, in a case where the nearby person 42 is not included in the field of view of the target person 41, the CPU 11a of the management server 300 performs the display in the second display form.

In other words, in a case where the nearby person 42 does not appear in the video obtained by the device camera 214, the CPU 11a of the management server 300 performs display in the second display form.

That is, in this case, the CPU 11a of the management server 300 displays the utterance content image 45 at a specific location within the field of view.

More specifically, in this case, the CPU 11a of the management server 300 displays the utterance content image 45 in a form in which the utterance content image 45 is aligned with a right side 271R of the display screen 270, as described above, for example.

In other words, in this case, the CPU 11a of the management server 300 displays the utterance content image 45 in a form in which the utterance content image 45 is aligned with the right side of the field of view of the target person 41.

Here, in the second display form in which the utterance content image 45 is displayed in a form in which the utterance content image 45 is aligned with the right side of the field of view of the target person 41, the display becomes the same as the display shown in FIG. 7, for example.

In the display shown in FIG. 7, the utterance content image 45 is displayed in a state of being arranged along a common column 560 extending in an up-down direction.

In the display form shown in FIG. 7, a plurality of utterance content images 45 corresponding to a plurality of nearby persons 42 are displayed in a state of being arranged in the up-down direction and arranged in a single column.

In a situation where a plurality of nearby persons 42 are not within the field of view of the target person 41 and the plurality of nearby persons 42 have made utterances, in this example, a plurality of utterance content images 45 corresponding to the plurality of nearby persons 42 are displayed in a state of being arranged in a single common column.

In FIG. 7, the plurality of utterance content images 45 corresponding to the plurality of nearby persons 42 are displayed in a state of being arranged along the common column 560 and are displayed on the right side of the display screen 270.

Further, in the display example shown in FIG. 7, the utterance content images 45 are displayed such that it is possible to discriminate which the nearby person 42 each of the utterance content images 45 is the utterance content images 45 of.

Specifically, in this example, by making the color of the frame line 45A constituting a part of the utterance content image 45 different, it is possible to discriminate which the nearby person 42 each of the utterance content images 45 is the utterance content images 45 of.

In FIG. 7, differences in colors of the frame lines 45A are represented by different line types. For example, a frame line 45A indicated by the broken line is a blue frame line 45A, and a frame line 45A indicated by the solid line is a red frame line 45A.

In addition, by making the line type of the frame line 45A different, it may be possible to discriminate which the nearby person 42 each of the utterance content images 45 is the utterance content images 45 of.

In addition, the name of the nearby person 42 may be associated with each utterance content image 45, so that it may be possible to discriminate which the nearby person 42 each of the utterance content images 45 is the utterance content images 45 of.

Although not described above, the utterance content image 45 of the present exemplary embodiment is composed of a frame line 45A and a text image 45B located the inner side of the frame line 45A. The utterance content of the nearby person 42 is represented by the text image 45B.

### [Other Display Examples]

In addition, in the second display form, the CPU 11a of the management server 300 may display the utterance content image 45 in a form in which the utterance content image 45 is associated with a specific target object existing within the field of view of the target person 41.

In the second display form in which the utterance content image 45 is displayed at a specific location within the field of view without associating the utterance content image 45 with the nearby person 42, the utterance content image 45 may be associated with a specific target object in addition to the display form shown in FIG. 7 and the like.

FIG. 11 is a diagram showing a display example in a case where the utterance content image 45 is associated with a monitor which is an example of a specific target object existing within the field of view of the target person 41.

In this display example, the utterance content image 45 is displayed in a form in which the utterance content image 45 is associated with the monitor which is an example of the specific target object existing within the field of view of the target person 41.

In this display example, the CPU 11a of the management server 300 generates control information for displaying the utterance content image 45 in a form in which the utterance content image 45 is associated with the monitor existing within the field of view of the target person 41.

In addition, in this example, the CPU 11a of the management server 300 generates control information for displaying the utterance content image 45 such that the utterance content image 45 does not overlap the monitor.

The CPU 11a of the management server 300 determines whether or not the specific target object appears in the video obtained by the device camera 214.

The CPU 11a of the management server 300 performs, for example, matching processing of images to determine whether or not the specific target object appears in the video obtained by the device camera 214. This matching processing is known processing, and the detailed description thereof will be omitted.

In a case where the specific target object appears in the video obtained by the device camera 214, the CPU 11a of the management server 300 displays the utterance content image 45 in a form in which the utterance content image 45 is associated with the specific target object.

More specifically, the CPU 11a of the management server 300 displays the utterance content image 45 on the side or the like of the specific target object. In other words, the CPU 11a of the management server 300 displays the utterance content image 45 in a region around the specific target object.

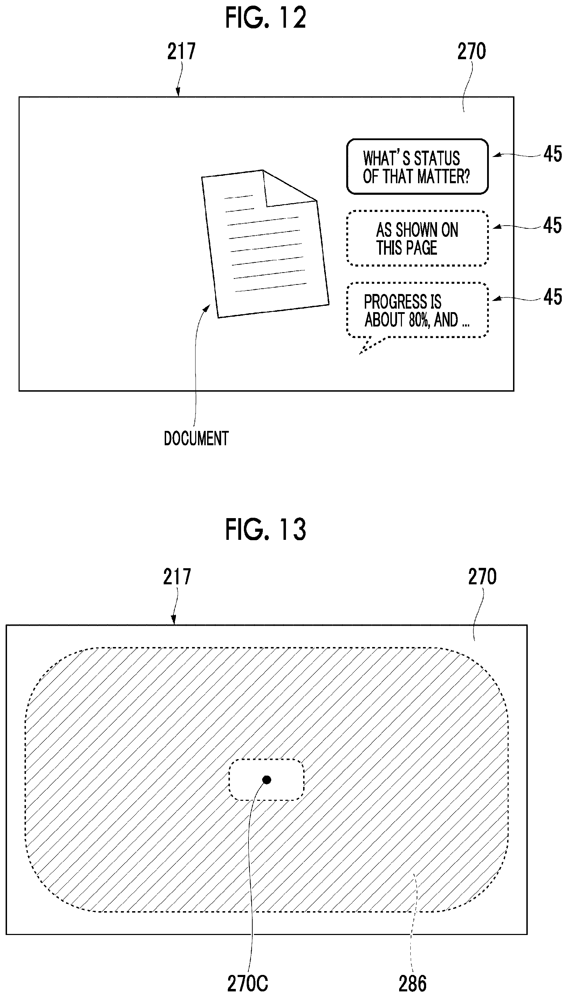

FIG. 12 is a diagram showing a state of the display screen 270 in a case where the target person 41 is viewing a document at hand. In this example, a state of the display screen 270 in a case where the specific target object is the document is shown.

In this example, the utterance content image 45 is displayed in a form associated with the document. In addition, in this example, the utterance content image 45 is displayed in a form in which the utterance content image 45 does not overlap this material.

The specific target object such as a monitor or a document may be specified by detecting a specific marker that has been attached to the specific target object in advance.

In this case, the specific marker that is predetermined is attached to the specific target object in advance.

In this case, in a case where the specific marker appears in the video obtained by the device camera 214, the CPU 11a of the management server 300 specifies that the specific target object appears in the video.

In this case, the CPU 11a of the management server 300 displays the utterance content image 45 in a form in which the utterance content image 45 is associated with the specific marker.

In a situation in which the nearby person 42 exists within the field of view of the target person 41, as shown in FIG. 4 and FIG. 6, the utterance content image 45 is displayed in a form associated with each of the target persons 41.

In addition, in a situation in which the nearby person 42 does not exist within the field of view and a situation in which the specific target object does not yet exist within the field of view, the latest utterance content image 45 is displayed at a location where the most recent utterance content image 45 had been displayed.

In addition, in a situation in which the nearby person 42 does not exist within the field of view and a situation in which the specific target object does not yet exist within the field of view, for example, as shown in FIG. 7, the utterance content image 45 is aligned with the right side 271R and displayed.

On the other hand, in a situation in which the nearby person 42 does not exist within the field of view and a situation in which the specific target object appears within the field of view, the display is switched, and the display shown in FIGS. 11 and 12 is performed.

The situation in which the nearby person 42 does not exist within the field of view is synonymous with a situation in which the nearby person 42 does not appear in the video obtained by the device camera 214.

In addition, the situation in which the specific target object appears within the field of view is synonymous with a situation in which the specific target object appears in the video obtained by the device camera 214.

Here, in a situation in which both the nearby person 42 and the specific target object appear within the field of view, the display in the first display form may be continued as it is.

In addition, in a situation in which both the nearby person 42 and the specific target object appear within the field of view, the display form may be switched to the second display form, and the utterance content image 45 may be associated with the specific target object.

FIG. 13 is a diagram for describing another example of a display location of the utterance content image 45.

In addition, in the second display form, the CPU 11a of the management server 300 may display the utterance content image 45 at a specific location in the field of view of the target person 41 while displaying the utterance content image 45 at location that does not overlap the specific target object existing within the field of view.

In this case, examples of the "specific location" include a location other than the central portion 270C of the display screen 270 as shown in FIG. 13.

More specifically, examples of the "specific location" include an annular region 286 that is located around the central portion 270C of the display screen 270 and surrounds the central portion 270C of the display screen 270.

In the second display form, the utterance content image 45 may be displayed at the specific location consisting of the annular region 286 while the utterance content image 45 is displayed at a location that does not overlap the specific target object existing within the field of view as described above.

In this case, the utterance content image 45 is displayed at a location that is within the annular region 286 and does not overlap the specific target object.

In the example shown in FIG. 11, the right side of the specific target object is a display location of the utterance content image 45. In other words, in the example shown in FIG. 11, the right side of the specific target object is predetermined as the display location of the utterance content image 45.

In this case, in a state in which the specific target object is located on the right side within the field of view, the utterance content image 45 is no longer displayed.

On the other hand, in a case where the utterance content image 45 is displayed at a location that is within the annular region 286 and does not overlap the specific target object, in a situation where the specific target object is located on the right side in the field of view, the utterance content image 45 is displayed on the left side, the upper side, or the lower side of the specific target object.

In addition, in the second display form, the CPU 11a of the management server 300 may make the display form of the utterance content image 45 different according to the size of the specific target object existing within the field of view of the target person 41. Specifically, the CPU 11a of the management server 300 may change the display form of the utterance content image 45 according to the size of the specific target object with respect to the field of view of the target person 41.

More specifically, in a case where the size of the specific target object with respect to the field of view is larger than a predetermined threshold value, the CPU 11a decreases the number of displayed utterance content image 45 and/or decreases the size of the utterance content image 45, as compared with a case where the size of the specific target object is smaller than the threshold value.

Here, in the present exemplary embodiment, the CPU 11a of the management server 300 specifies the size of the specific target object with respect to the field of view based on, for example, the size, on the display screen 270, of the specific target object appearing on the display screen 270 and the size of the display screen 270.

More specifically, the CPU 11a of the management server 300 specifies the size of the specific target object with respect to the field of view based on, for example, a length of the specific portion of the specific target object appearing on the display screen 270, which is the length on the display screen 270, and a length of the diagonal line of the display screen 270.

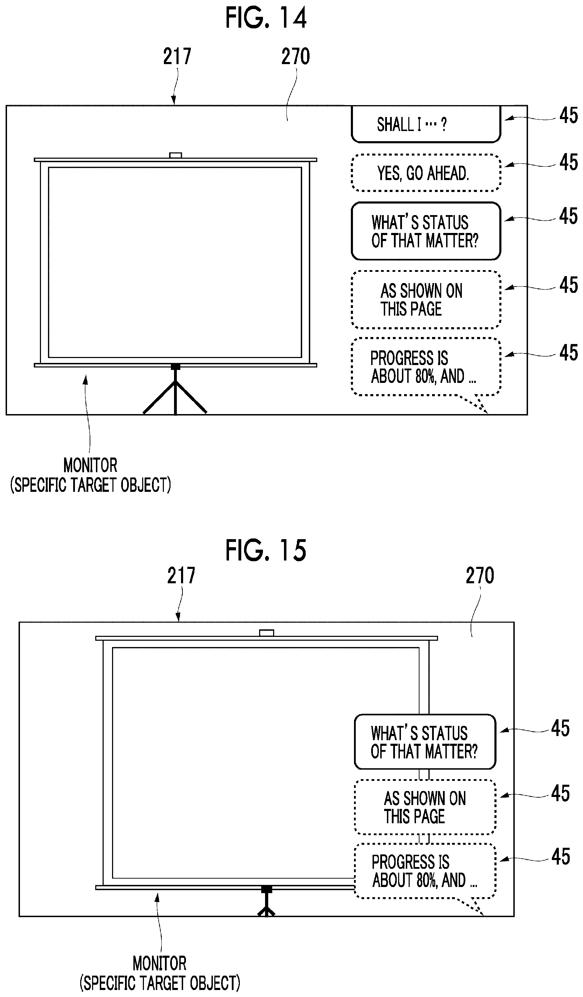

FIG. 14 is a diagram showing a display example in a case where a size of the specific target object with respect to the field of view of the target person 41 is smaller than a predetermined threshold value. Here, the specific target object is a monitor.

In this display example, the number of displayed utterance content images 45 is 4.5.

In addition, in the display example shown in FIG. 14, the utterance content image 45 is displayed in a manner that does not overlap the monitor as an example of the specific target object.

FIG. 15 is a diagram showing a display example in a case where a size of the specific target object with respect to the field of view of the target person 41 is larger than a predetermined threshold value.

In this case, the CPU 11a of the management server 300 reduces the number of displayed utterance content images 45. As a result, as shown in FIG. 15, the number of displayed utterance content images 45 is smaller than that in the situation shown in FIG. 14. In this example, the number of displayed utterance content images 45 is three.

In addition, in this display example, the utterance content image 45 is displayed in an overlapping manner on the monitor.

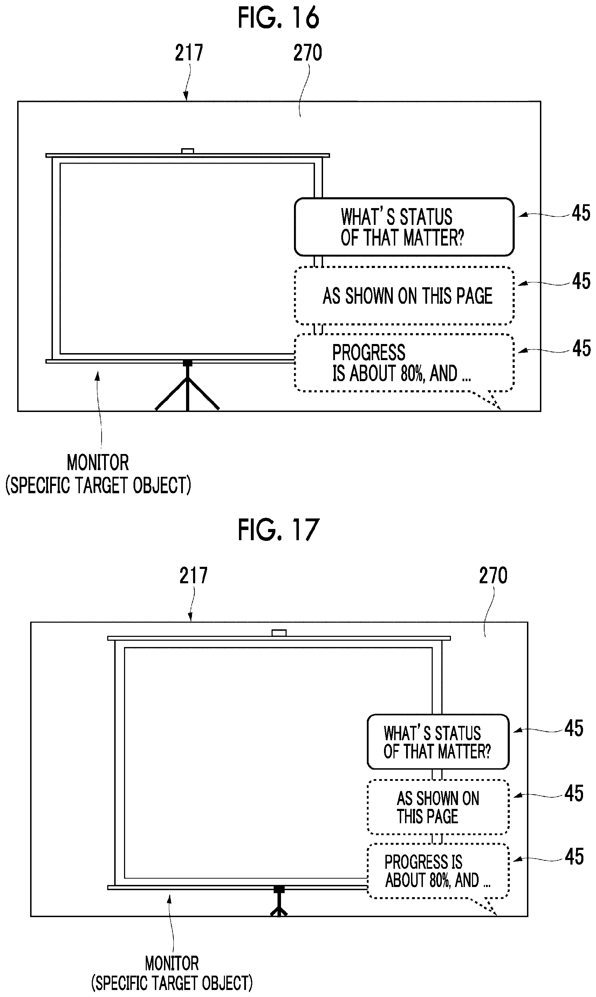

FIGS. 16 and 17 are diagrams showing another display example in the display unit 217.

FIG. 16 shows a case where the size of the specific target object with respect to the field of view is smaller than the predetermined threshold value.

In this case, each of the utterance content images 45 is displayed in a large size.

On the other hand, FIG. 17 shows a display example in a case where the size of the specific target object with respect to the field of view is larger than the predetermined threshold value.

In the display example shown in FIG. 17, the size of each of the utterance content images 45 is smaller than the size in the display example shown in FIG. 16.

In addition, in a case where the size of the specific target object with respect to the field of view is smaller than the predetermined threshold value, the number of displayed utterance content images 45 may be increased, and each of the utterance content images 45 may be enlarged.

In addition, in a case where the size of the specific target object with respect to the field of view is larger than the predetermined threshold value, the number of displayed utterance content images 45 may be reduced, and each of the utterance content images 45 may be made smaller.

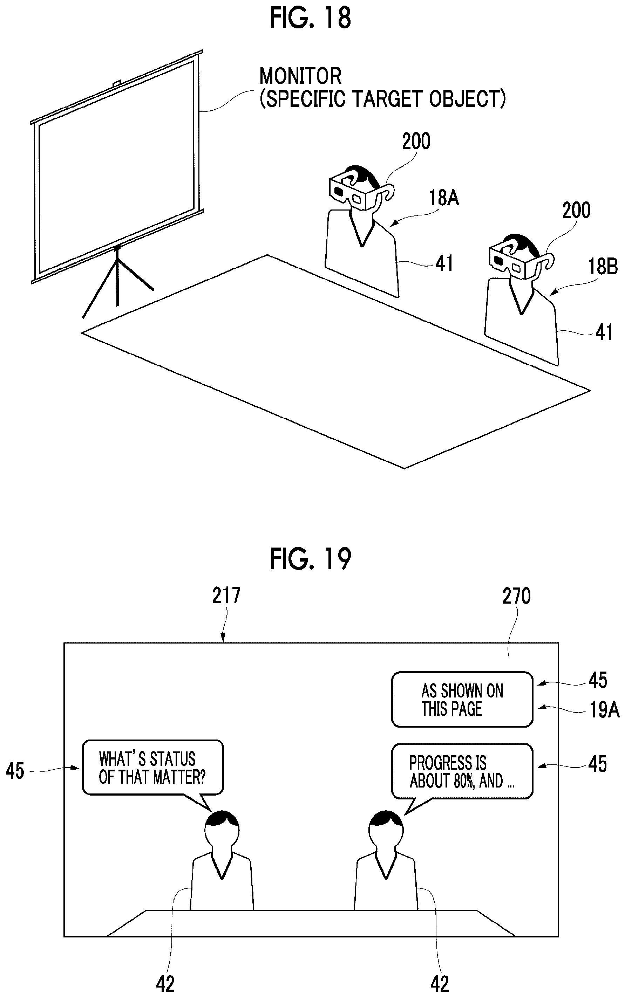

FIG. 18 is a diagram showing a relationship between the specific target object and the target person 41.

In a case where the target person 41 is located at a location indicated by a reference numeral 18A in FIG. 18, a distance between the target person 41 and the monitor, which is an example of the specific target object, is reduced.

On the other hand, in a case in which the target person 41 is located at a location indicated by a reference numeral 18B in FIG. 18, the distance between the target person 41 and the monitor is increased.

In a case where the target person 41 is located at a location indicated by the reference numeral 18A and a distance between the display device 200 and the monitor is small, the monitor is displayed in a larger state on the display device 200.

In this case, the utterance content image 45 and the monitor are likely to overlap each other, and it is difficult to visually recognize the utterance content image 45 and the monitor.

In this case, as described above, in a case where the size of the utterance content image 45 is reduced or the number of displayed utterance content images 45 is reduced, it is easy to visually recognize the utterance content image 45 and the monitor.

### [Number of Display Columns of Utterance Content Image]

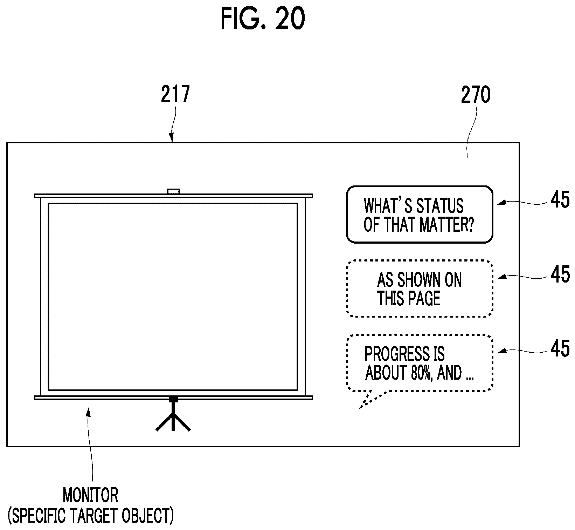

FIGS. 19 and 20 are diagrams showing the number of display columns of the utterance content image 45.

FIG. 19 shows another example of the display screen 270 in the first display form.

In FIG. 19, the number of display columns of the utterance content image 45 is plural. In FIG. 19, as in the above, the utterance content image 45 is displayed for each nearby person 42. Further, in FIG. 19, as indicated by a reference numeral 19A, not only the latest utterance content image 45 but also the immediately previous utterance content image 45 is displayed.

The immediately previous utterance content image 45 is displayed above the latest utterance content image 45.

In this display example, the utterance content images 45 generated for each utterance of the nearby person 42 are displayed in a state of being arranged in a time-series order.

FIG. 20 is a diagram showing a display screen 270 in the second display form. The display screen 270 shown in FIG. 20 is the same as the display screen 270 shown in FIG. 8.

On the display screen 270 shown in FIG. 20, a situation in which a plurality of nearby persons 42 are not within the field of view of the target person 41 is shown. More specifically, on the display screen 270 shown in FIG. 20, a situation in which no nearby person 42 is within the field of view of the target person 41 is shown.

In the present exemplary embodiment, in a case where the plurality of nearby persons 42 are not within the field of view of the target person 41, the CPU 11a of the management server 300 displays the utterance content image 45 with a smaller number of display columns as shown in FIG. 20.

Specifically, in a case where the plurality of nearby persons 42 are not within the field of view of the target person 41, the CPU 11a of the management server 300 displays the utterance content image 45 with the number of display columns smaller than the number of display columns of the utterance content image 45 in a case where the plurality of nearby persons 42 are within the field of view.

In the situation shown in FIG. 20, the utterance content images 45 are displayed in one column instead of two columns, even though the two nearby persons 42 are uttering.

In a case where the display form of the utterance content image 45 displayed within the field of view is to be made different depending on whether or not the nearby person 42 is within the field of view of the target person 41, the number of display columns of the utterance content image 45 may be made different in this way.

In a case where the plurality of nearby persons 42 are within the field of view of the target person 41, the CPU 11a of the management server 300 displays the utterance content images 45 over a plurality of columns as shown in FIG. 19.

On the other hand, in a case where the nearby person 42 is not within the field of view of the target person 41, the CPU 11a of the management server 300 displays the utterance content image 45 with the number of display columns smaller than the number of display columns in a case where the nearby person 42 is within the field of view.

In FIG. 20, the nearby person 42 is not within the field of view of the target person 41. In FIG. 20, the CPU 11a of the management server 300 displays the utterance content images 45 in one column.

### [Another Method of Switching Display Form]

In addition, in a case of switching to the second display form, the orientation of the display device 200 in a case of switching may be registered in advance.

Then, in a case where the display device 200 faces the orientation registered in advance, the display device 200 may switch to the second display form.

In the above, the display form is switched based on the instruction from the target person 41, the presence or absence of a specific target object in the field of view, and the like, but the present invention is not limited to this, and the display form may be switched based on the orientation of the display device 200.

In this case, the target person 41 registers in advance the direction in which the monitor is located and the direction in which the material is located. In this case, the CPU 11a of the management server 300 switches the display form in a case where the display device 200 faces these directions.

The present invention has been described above. The present invention can also be applied to a program and a program product.

### (Supplementary Note)

(((1))) A control device comprising:
   a processor,
   wherein the control device controls a display device that displays an utterance content image that is an image representing a content of an utterance made by a nearby person located around a target person within a field of view of the target person, and
   the processor is configured to:
      display the utterance content image in a first display form in which the utterance content image is displayed in a state of being associated with each of nearby persons located within the field of view, and display the utterance content image in a second display form in which the utterance content image is displayed at a specific location within the field of view.
(((2))) The control device according to (((1))), wherein the processor is configured to:
   switch the display performed by the display device such that the display in one display form among a plurality of display forms including at least the first display form and the second display form is performed.
(((3))) The control device according to (((2))), wherein the processor is configured to:
   switch the display performed by the display device based on an instruction from the target person.
(((4))) The control device according to (((2))), wherein the processor is configured to:
   switch the display performed by the display device based on situation information that is information about a situation within the field of view.
(((5))) The control device according to (((4))), wherein the processor is configured to:
   switch the display performed by the display device based on information about presence or absence of the nearby person within the field of view.
(((6))) The control device according to (((5))), wherein the processor is configured to:
   perform the display in the first display form in a case where the nearby person exists within the field of view, and perform the display in the second display form in a case where the nearby person does not exist within the field of view.
(((7))) The control device according to any one of (((1))) to (((6))), wherein the processor is configured to:
   in the second display form, display the utterance content image, in a form in which the utterance content image is associated with a specific target object existing within the field of view.
(((8))) The control device according to (((7))), wherein the processor is configured to:
   display the utterance content image in a form in which the utterance content image does not overlap the specific target object.
(((9))) The control device according to any one of (((1))) to (((6))), wherein the processor is configured to:
   in the second display form, display the utterance content image, at a location that is the specific location within the field of view and not overlapping a specific target object existing within the field of view.
(((10))) The control device according to any one of (((1))) to (((9))), wherein the processor is configured to:
   change a display form of the utterance content image in the second display form according to a size of a specific target object existing within the field of view, the size being a size of the specific target object with respect to the field of view.
(((11))) The control device according to (((10))), wherein the processor is configured to:
   in a case where the size of the specific target object with respect to the field of view is larger than a predetermined threshold value, decrease the number of displayed utterance content images and/or decrease a size of the utterance content image, as compared with a case where the size of the specific target object is smaller than the threshold value.
(((12))) The control device according to any one of (((1))) to (((11))),
   wherein the display device has a display screen,
   the utterance content image is displayed on the display screen disposed in front of the target person, and
   the processor is configured to:
      display the utterance content image, in the second display form, at a location deviated from a central portion of the display screen.
(((13))) The control device according to (((12))), wherein the processor is configured to:
   display the utterance content image, in the second display form, in a form in which the utterance content image is aligned with any one side of four sides of the rectangular display screen.
(((14))) The control device according to (((13))), wherein the processor is configured to:
   in a case where a plurality of utterance content images are displayed, display the plurality of utterance content images, in the second display form, in a form in which the plurality of utterance content images are aligned with one side of the four sides and the plurality of utterance content images are arranged in an extending direction of the one side.
(((15))) The control device according to any one of (((1))) to (((14))), wherein the processor is configured to:
   display the utterance content image, in the second display form, in a form in which the utterance content image is not associated with the nearby person located within the field of view.
(((16))) A control device comprising:
   a processor,
   wherein the control device controls a display device that displays an utterance content image that is an image representing a content of an utterance made by a nearby person located around a target person within a field of view of the target person, and
   the processor is configured to:
      change a display form of the utterance content image displayed within the field of view depending on whether or not the nearby person is within the field of view of the target person.
(((17))) The control device according to (((16))), wherein the processor is configured to:
   display the utterance content image in a form associated with the nearby person in a case where the nearby person is within the field of view of the target person; and
   display the utterance content image at a specific location within the field of view in a case where the nearby person is not within the field of view of the target person.
(((18))) The control device according to (((16))), wherein the processor is configured to:
   in a case where a plurality of nearby persons are within the field of view of the target person, display the utterance content image in a form associated with each of the nearby persons; and
   in a case where the plurality of nearby persons are not within the field of view of the target person, display utterance content images corresponding respectively to the plurality of nearby persons in a state of being arranged in a common column.
(((19))) The control device according to (((18))), wherein the processor is configured to:
   in a case where the plurality of nearby persons are not within the field of view of the target person, display the utterance content images corresponding respectively to the plurality of nearby persons in a state of being arranged in the common column, and perform a display such that it is possible to discriminate which nearby person each of the utterance content images is the utterance content image of.
(((20))) The control device according to (((16))), wherein the processor is configured to:
   in a case where a plurality of nearby persons are within the field of view of the target person, display utterance content images over a plurality of columns; and
   in a case where the plurality of nearby persons are not within the field of view of the target person, display the utterance content images with the number of display columns of the utterance content images smaller than the number of display columns in a case where the plurality of nearby persons are within the field of view of the target person.
(((21))) A display system comprising:
   a display device that displays an utterance content image that is an image representing a content of an utterance made by a nearby person located around a target person within a field of view of the target person; and
   a control device that controls the display device,
   wherein the control device has a configuration of the control device according to any one of (((1))) to (((20))).
(((22))) A program executed by a computer that controls a display device that displays an utterance content image that is an image representing a content of an utterance made by a nearby person located around a target person within a field of view of the target person, the program causing the computer to realize:
   a function of displaying the utterance content image in a first display form in which the utterance content image is displayed in a state of being associated with each of nearby persons located within the field of view, and of displaying the utterance content image in a second display form in which the utterance content image is displayed at a specific location within the field of view.
(((23))) A program executed by a computer that controls a display device that displays an utterance content image that is an image representing a content of an utterance made by a nearby person located around a target person within a field of view of the target person, the program causing the computer to realize:
   a function of changing a display form of the utterance content image displayed within the field of view according to whether or not the nearby person is within the field of view of the target person.

With the control device according to (((1))), it is possible to change a display form of the utterance content image, which is an image representing the content of the utterance made by the nearby person located around the target person, in displaying the utterance content image within the field of view of the target person.

With the control device according to (((2))), it is possible to perform the display in one display form of the first display form and the second display form.

With the control device according to (((3))), it is possible to switch the display performed by the display device based on the instruction of the target person.

With the control device according to (((4))), it is possible to switch the display performed by the display device according to the situation within the field of view of the target person.

With the control device according to (((5))), it is possible to switch the display performed by the display device according to the situation of the presence or absence of the nearby person within the field of view of the target person.

With the control device according to (((6))), in a case where the nearby person exists within the field of view of the target person, the utterance content image can be displayed in a state in which the utterance content image is associated with the nearby person, and in a case where the nearby person does not exist within the field of view of the target person, the utterance content image can be displayed at a specific location within the field of view of the target person.

With the control device according to (((7))), in the second display form in which the utterance content image is displayed at the specific location within the field of view of the target person, the utterance content image can be displayed in a form in which the utterance content image is associated with the specific target object existing within the field of view of the target person.

With the control device according to (((8))), it is possible to make it easier to visually recognize the specific target object and the utterance content image, as compared with a case where the utterance content image is displayed in a manner in which the utterance content image overlaps the specific target object.

With the control device according to (((9))), it is possible to make it easier to visually recognize the specific target object or the utterance content image, as compared with a case where the utterance content image is displayed at a location overlapping the specific target object existing within the field of view of the target person.

With the control device according to (((10))), it is possible to change the display form of the utterance content image according to the size of the specific target object with respect to the field of view of the target person.

With the control device according to (((11))), it is possible to make it easier for the target person to visually recognize the specific target object, as compared with a case where the number of displayed utterance content images is not reduced or the size of the utterance content image is not reduced.

With the control device according to (((12))), the target person can more easily visually recognize the image other than the utterance content image, which is the image displayed on the display screen, as compared with a case where the utterance content image is displayed in the central portion of the display screen.

With the control device according to (((13))), the target person can more easily visually recognize the image other than the utterance content image, which is the image displayed on the display screen, as compared with a case where the utterance content image is displayed in the central portion of the display screen.

With the control device according to (((14))), the target person can more easily visually recognize the image other than the utterance content image, which is the image displayed on the display screen, as compared with a case where the plurality of utterance content images are displayed in a form in which the plurality of utterance content images are arranged in a direction intersecting the extending direction of the one side.

With the control device according to (((15))), even in a case where the nearby person is within the field of view of the target person, the utterance content image can be displayed in a form in which the utterance content image is not associated with the target person.

With the control device according to (((16))), it is possible to change a display form of the utterance content image, which is an image representing the content of the utterance made by the nearby person located around the target person, in displaying the utterance content image within the field of view of the target person.

With the control device according to (((17))), in a case where a nearby person is within the field of view of the target person, the utterance content image can be displayed in a form associated with the nearby person, and in a case where the nearby person is not within the field of view of the target person, the utterance content image can be displayed at a specific location within the field of view of the target person.

With the control device according to (((18))), the number of display columns of the utterance content images can be reduced as compared with a case where the utterance content images are displayed in a form associated with each of the plurality of target persons.

With the control device according to (((19))), even in a case where the utterance content images corresponding respectively to the plurality of nearby persons are displayed in a state of being arranged in a common column, it is possible to discriminate which nearby person each of the utterance content images is the utterance content image of.

With the control device according to (((20))), the number of display columns of the utterance content images can be reduced as compared with a case where the utterance content images are displayed in a form associated with each of the plurality of target persons.

With the display system according to (((21))), it is possible to change a display form of the utterance content image, which is an image representing the content of the utterance made by the nearby person located around the target person, in displaying the utterance content image within the field of view of the target person.

With the program according to (((22))), it is possible to change a display form of the utterance content image, which is an image representing the content of the utterance made by the nearby person located around the target person, in displaying the utterance content image within the field of view of the target person.

With the program according to (((23))), it is possible to change a display form of the utterance content image, which is an image representing the content of the utterance made by the nearby person located around the target person, in displaying the utterance content image within the field of view of the target person.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
41: target person
42: nearby person
45: utterance content image
45A: frame line
45B: text image
200: display device
214: device camera
217: display unit
218: operation receiving unit
270: display screen
270C: central portion
271: side
271R: right side
300: management server

## Claims

1. A control device comprising:
a processor,
wherein the control device controls a display device that displays an utterance content image that is an image representing a content of an utterance made by a nearby person located around a target person within a field of view of the target person, and
the processor is configured to:
display the utterance content image in a first display form in which the utterance content image is displayed in a state of being associated with each of nearby persons located within the field of view, and display the utterance content image in a second display form in which the utterance content image is displayed at a specific location within the field of view.

2. The control device according to claim 1, wherein the processor is configured to:
switch the display performed by the display device such that the display in one display form among a plurality of display forms including at least the first display form and the second display form is performed.

3. The control device according to claim 2, wherein the processor is configured to:
switch the display performed by the display device based on an instruction from the target person.

4. The control device according to claim 2, wherein the processor is configured to:
switch the display performed by the display device based on situation information that is information about a situation within the field of view.

5. The control device according to claim 4, wherein the processor is configured to:
switch the display performed by the display device based on information about presence or absence of the nearby person within the field of view.

6. The control device according to claim 5, wherein the processor is configured to:
perform the display in the first display form in a case where the nearby person exists within the field of view, and perform the display in the second display form in a case where the nearby person does not exist within the field of view.

7. The control device according to any one of claims 1 to 6, wherein the processor is configured to:
in the second display form, display the utterance content image, in a form in which the utterance content image is associated with a specific target object existing within the field of view.

8. The control device according to claim 7, wherein the processor is configured to:
display the utterance content image in a form in which the utterance content image does not overlap the specific target object.

9. The control device according to any one of claims 1 to 6, wherein the processor is configured to:
in the second display form, display the utterance content image, at a location that is the specific location within the field of view and not overlapping a specific target object existing within the field of view.

10. The control device according to any one of claims 1 to 9, wherein the processor is configured to:
change a display form of the utterance content image in the second display form according to a size of a specific target object existing within the field of view, the size being a size of the specific target object with respect to the field of view.

11. The control device according to claim 10, wherein the processor is configured to:
in a case where the size of the specific target object with respect to the field of view is larger than a predetermined threshold value, decrease the number of displayed utterance content images and/or decrease a size of the utterance content image, as compared with a case where the size of the specific target object is smaller than the threshold value.

12. The control device according to any one of claims 1 to 11,
wherein the display device has a display screen,
the utterance content image is displayed on the display screen disposed in front of the target person, and
the processor is configured to:
display the utterance content image, in the second display form, at a location deviated from a central portion of the display screen.

13. The control device according to claim 12, wherein the processor is configured to:
display the utterance content image, in the second display form, in a form in which the utterance content image is aligned with any one side of four sides of the rectangular display screen.

14. The control device according to claim 13, wherein the processor is configured to:
in a case where a plurality of utterance content images are displayed, display the plurality of utterance content images, in the second display form, in a form in which the plurality of utterance content images are aligned with one side of the four sides and the plurality of utterance content images are arranged in an extending direction of the one side.

15. A program executed by a computer that controls a display device that displays an utterance content image that is an image representing a content of an utterance made by a nearby person located around a target person within a field of view of the target person, the program causing the computer to realize:
a function of displaying the utterance content image in a first display form in which the utterance content image is displayed in a state of being associated with each of nearby persons located within the field of view, and of displaying the utterance content image in a second display form in which the utterance content image is displayed at a specific location within the field of view.

## Amended claims

### Amended claims in accordance with Rule 137(2) EPC.

1. A control device comprising:
a processor,
wherein the control device controls a display device (200) that displays an utterance content image (45) that is an image representing a content of an utterance made by a nearby person (42) located around a target person (41) within a field of view of the target person (41), and
the processor is configured to:
display the utterance content image (45) in a first display form in which the utterance content image (45) is displayed in a state of being associated with each of nearby persons (42) located within the field of view, and display the utterance content image (45) in a second display form in which the utterance content image (45) is displayed at a specific location within the field of view, wherein the processor is configured to:
in the second display form, display the utterance content image (45), in a form in which the utterance content image (45) is associated with a specific target object existing within the field of view and does not overlap the specific target object.

2. The control device according to claim 1, wherein the processor is configured to:
switch the display performed by the display device (200) such that the display in one display form among a plurality of display forms including at least the first display form and the second display form is performed.

3. The control device according to claim 2, wherein the processor is configured to:
switch the display performed by the display device (200) based on an instruction from the target person (41).

4. The control device according to claim 2, wherein the processor is configured to:
switch the display performed by the display device (200) based on situation information that is information about a situation within the field of view.

5. The control device according to claim 4, wherein the processor is configured to:
switch the display performed by the display device (200) based on information about presence or absence of the nearby person (42) within the field of view.

6. The control device according to claim 5, wherein the processor is configured to:
perform the display in the first display form in a case where the nearby person (42) exists within the field of view, and perform the display in the second display form in a case where the nearby person (42) does not exist within the field of view.

7. The control device according to any one of claims 1 to 6, wherein the processor is configured to:
in the second display form, display the utterance content image (45), at a location that is the specific location within the field of view and not overlapping a specific target object existing within the field of view.

8. The control device according to any one of claims 1 to 6, wherein the processor is configured to:
change a display form of the utterance content image (45) in the second display form according to a size of a specific target object existing within the field of view, the size being a size of the specific target object with respect to the field of view.

9. The control device according to claim 8, wherein the processor is configured to:
in a case where the size of the specific target object with respect to the field of view is larger than a predetermined threshold value, decrease the number of displayed utterance content images (45) and/or decrease a size of the utterance content image (45), as compared with a case where the size of the specific target object is smaller than the threshold value.

10. The control device according to any one of claims 1 to 8,
wherein the display device (200) has a display screen (270),
the utterance content image (45) is displayed on the display screen (270) disposed in front of the target person (41), and
the processor is configured to:
display the utterance content image (45), in the second display form, at a location deviated from a central portion (270C) of the display screen (270).

11. The control device according to claim 10, wherein the processor is configured to:
display the utterance content image (45), in the second display form, in a form in which the utterance content image (45) is aligned with any one side of four sides of the rectangular display screen (270).

12. The control device according to claim 11, wherein the processor is configured to:
in a case where a plurality of utterance content images (45) are displayed, display the plurality of utterance content images (45), in the second display form, in a form in which the plurality of utterance content images (45) are aligned with one side (271) of the four sides (271) and the plurality of utterance content images (45) are arranged in an extending direction of the one side (271).

13. A program executed by a computer that controls a display device (200) that displays an utterance content image (45) that is an image representing a content of an utterance made by a nearby person (42) located around a target person (41) within a field of view of the target person (41), the program causing the computer to realize:
a function of displaying the utterance content image (45) in a first display form in which the utterance content image (45) is displayed in a state of being associated with each of nearby persons (42) located within the field of view, and of displaying the utterance content image (45) in a second display form in which the utterance content image (45) is displayed at a specific location within the field of view, wherein the program further causes the computer to:
in the second display form, display the utterance content image (45), in a form in which the utterance content image (45) is associated with a specific target object existing within the field of view and does not overlap the specific target object.
